# EUROPEAN PATENT APPLICATION

(11) **EP 4 249 963 A1**
(43) Date of publication of application: **27.09.2023**
(21) Application number: 23162562.5
(22) Date of filing: 17.03.2023
(51) Int. Cl.: G01V 8/10

(54) **PHOTOELECTRIC SENSOR**

(30) Priority: 24.03.2022 JP 2022047841
(71) Applicant: Panasonic Intellectual Property Management Co., Ltd., Osaka-shi, Osaka 540-6207 (JP)
(72) Inventor: IMAMURA, Shinya, Osaka, 540-6207 (JP); UCHIYAMA, Satoshi, Osaka, 540-6207 (JP)
(74) Representative: Murgitroyd & Company

(57) **Abstract**

A photoelectric sensor includes a box-shaped housing. The housing includes a housing upper surface that is rectangular. The photoelectric sensor includes an operation portion and a display unit on a housing upper surface. The operation portion includes operation buttons. The display unit is arranged next to the operation portion in a longitudinal direction of the housing upper surface (X-direction). The display unit includes a display portion and a connection portion. The display portion is arranged relative to the operation portion in the longitudinal direction of the housing upper surface. The connection portion is arranged next to the display portion in a latitudinal direction of the housing upper surface (Y-direction).

## Description

### BACKGROUND

The present disclosure relates to a photoelectric sensor.

A sensor for detecting an object includes a light projector that projects light and a light receiver that receives the light projected by the light projector. The sensor detects an object based on the amount of light received by the light receiver. The sensor shows on a display the amount of received light, a threshold value compared to the amount of received light, and the like. The display is formed by a 7-segment light-emitting diode (LED) display (for example, refer to Japanese Laid-Open Patent Publication No. 2009-110372). The sensor includes operation keys for switching the displayed contents.

A photoelectric switch developed in recent years includes a dot matrix display (for example, refer to Japanese Laid-Open Patent Publication No. 2019-061885). The photoelectric switch includes a reception unit that receives operations performed to set a threshold value or the like.

### SUMMARY

The reception unit is manually operated by a user. Thus, the reception unit needs to be easy to operate. Further, the user may check numerical values or the like shown on the display and operate a selection switch or the reception unit to change the threshold value or the like. Thus, the visibility of the numerical values shown on the display needs to be ensured.

In the above photoelectric switch, for example, a connection portion for the display is arranged between the display and the reception unit. This makes it difficult to ensure both of the operability of the reception unit and the visibility of the display. Also, the above photoelectric sensor may become large if the visibility and the operability were to be ensured. That is, it is difficult to ensure both operability and visibility without enlarging the sensor.

A photoelectric sensor in accordance with one aspect of the present disclosure includes a housing, a light projector, a light receiver, an operation portion, a display unit, a substrate, and a control circuit. The housing is box-shaped and includes a rectangular first surface. The light projector and the light receiver are arranged inside the housing. The operation portion is arranged on the first surface and includes operation buttons configured to be operable by an operator. The display unit is arranged inside the housing and includes a display portion and a connection portion. The display portion is of a dot matrix type and includes a display surface oriented in the same direction as the first surface. The display portion is disposed next to the operation portion in a longitudinal direction of the first surface. The connection portion is disposed next to the display portion in a latitudinal direction of the first surface. The substrate is arranged inside the housing and includes a first main surface and a second main surface faced away from each other in the latitudinal direction of the first surface. The control circuit is mounted on the substrate and shows on the display portion an amount of light received by the light receiver.

The present disclosure provides a photoelectric sensor that ensures the visibility and the operability.

### BRIEF DESCRIPTION OF THE DRAWINGS

Fig. 1 is a perspective view of a photoelectric sensor in accordance with an embodiment.
Fig. 2 is a plan view of the photoelectric sensor shown in Fig. 1.
Fig. 3 is an exploded perspective view of the photoelectric sensor shown in Fig. 1.
Fig. 4 is a plan view showing part of a display unit and a substrate in a connected state.
Fig. 5 is a side view showing part of the display unit and the substrate in the connected state.
Fig. 6 is a cross-sectional view showing part of the display unit in an accommodated state.
Fig. 7 is a perspective view of the display unit.
Fig. 8 is a perspective view showing the display and the substrate in the connected state.

### DETAILED DESCRIPTION

An embodiment of a photoelectric sensor will now be described with reference to the drawings.

In the drawings, elements are illustrated for simplicity and clarity and are not necessarily drawn to scale. To facilitate understanding, hatching lines may not be shown in the cross-sectional drawings. The appended drawings are provided to illustrate embodiments of the present disclosure and not to limit the scope of the present disclosure. In the present disclosure, "first", "second", "third", and the like are merely used to distinguish subjects from one another and not to give priority to one over the other.

The following detailed description includes apparatuses, systems, and/or methods that embody examples of the present disclosure. This detailed description is merely illustrative and is not intended to limit embodiments of the present disclosure, as well as applications and uses of such embodiments.

The phrase "at least one of" as used in this specification means "one or more" of a desired choice. For one example, the phrase "at least one of" as used in this specification means "only one single choice" or "both of two choices" if the number of its choices is two. For another example, the phrase "at least one of" as used in this specification means "only one single choice" or "any combination of more than or equal to two choices" if the number of its choices is more than or equal to three.

### Shape of Photoelectric Sensor

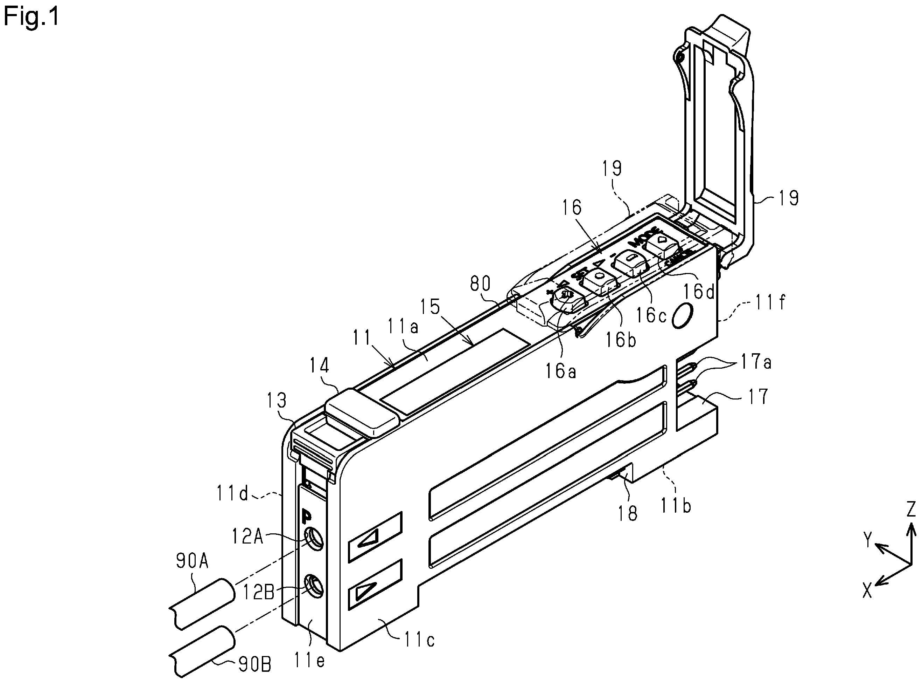

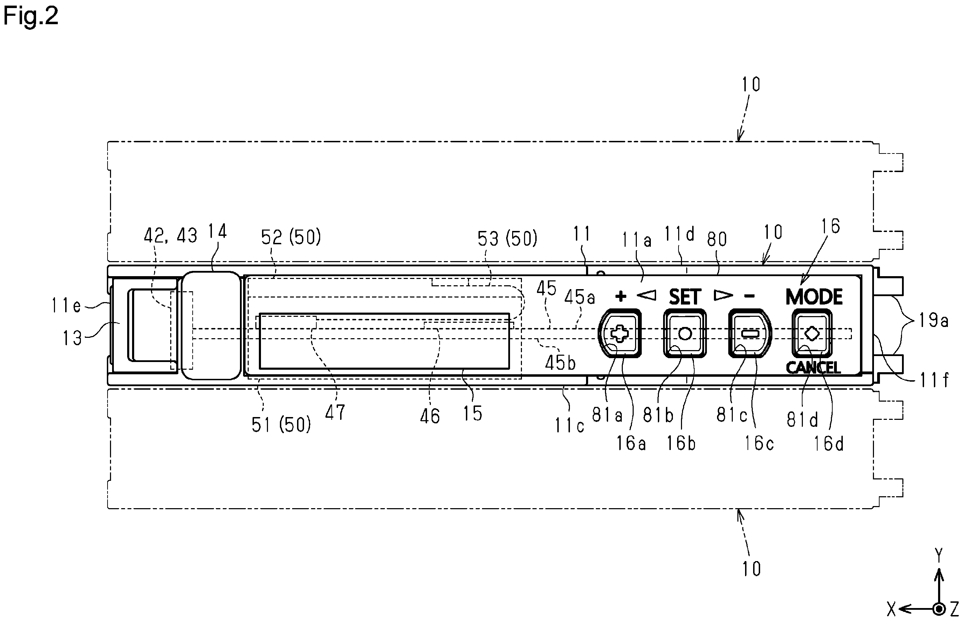

Figs. 1 and 2 show a photoelectric sensor 10 in accordance with an embodiment.

The photoelectric sensor 10 includes a housing 11. The housing 11 is box-shaped. In the present specification, "box-shaped" includes a box-shape of which corners and edges are chamfered or rounded. Also, a recess and the like may be formed on part of or all of the corners and edges. Also, a recess, a projection, and the like may be formed on part of or all of the surfaces. Further, in a "box-shaped" component, surfaces facing opposite directions do not necessarily have to be completely parallel to each other and may be somewhat inclined relative to each other.

The housing 11 includes a housing upper surface 11a, a housing lower surface 11b, a first side surface 11c, a second side surface 11d, a first end surface 11e, and a second end surface 11f. Each of the surfaces 11a to 11f is rectangular. The housing upper surface 11a and the housing lower surface 11b face opposite directions. The housing upper surface 11a is oriented in the height direction of the photoelectric sensor 10. The height direction will be referred to as the Z-direction. Two directions that are orthogonal to each other and to the Z-direction will now be referred to as the X-direction and the Y-direction, respectively. The housing 11 is box-shaped and is longer in the X-direction than the Y-direction and the Z-direction. The housing upper surface 11a is rectangular and is longer in the X-direction than the Y-direction. The X-direction coincides with the longitudinal direction of the housing upper surface 11a. Further, the Y-direction coincides with the latitudinal direction of the housing upper surface 11a. The housing upper surface 11a corresponds to a first surface.

The first side surface 11c and the second side surface 11d face away from each other in the latitudinal direction (Y-direction) of the housing upper surface 11a. The first end surface 11e and the second end surface 11f face away from each other in the longitudinal direction (X-direction) of the housing upper surface 11a.

The housing 11 includes two fiber insertion ports 12A and 12B in the first end surface 11e. The two fiber insertion ports 12A and 12B are arranged in the Z-direction. A light projecting optical fiber 90A is inserted into the fiber insertion port 12A. A light receiving optical fiber 90B is inserted into the fiber insertion port 12B. The housing 11 includes a fiber holding operation lever 13 at the side of the housing upper surface 11a near the first end surface 11e. The photoelectric sensor 10 is configured to hold the optical fibers 90A and 90B inserted into the fiber insertion ports 12A and 12B by operation of the fiber holding operation lever 13. Further, the photoelectric sensor 10 is configured to allow the optical fibers 90A and 90B to be inserted into and removed from the fiber insertion ports 12A and 12B by operation of the fiber holding operation lever 13.

The photoelectric sensor 10 includes the fiber holding operation lever 13, an operation indicating light 14, a display region 15, and an operation portion 16 on the housing upper surface 11a. The fiber holding operation lever 13, the operation indicating light 14, the display region 15, and the operation portion 16 are arranged in this order on the housing upper surface 11a from the side of the first end surface 11e toward the side of the second end surface 11f. Thus, the photoelectric sensor 10 includes the display region 15 and the operation portion 16 arranged next to each other in the longitudinal direction of the housing upper surface 11a.

The operation portion 16 is configured to be operable by an operator. The photoelectric sensor 10 shows on the display region 15 an amount of light received by a light receiver. Further, the photoelectric sensor 10 shows a set threshold value on the display region 15. The photoelectric sensor 10 stores the threshold value set in accordance with operation of the operation portion 16. The photoelectric sensor 10 compares the threshold value to the amount of received light and determines whether there is a detection subject based on the comparison result. The photoelectric sensor 10 activates and inactivates the operation indicating light 14 based on the determination result. The photoelectric sensor 10 notifies the operator of the determination result with the operation indicating light 14.

The housing 11 includes a cable connector 17 in the second end surface 11f of the housing 11. In an example, the housing 11 includes the cable connector 17 arranged on the second end surface 11f of the housing 11. The cable connector 17 includes connector pins 17a projecting out of the housing 11. The connector pins 17a are connected to an external cable. The external cable may include at least one of a power cable for supplying power to the photoelectric sensor 10, an input signal cable for supplying signals to the photoelectric sensor 10, and an output signal cable for outputting signals from the photoelectric sensor 10.

The housing 11 includes a coupling recess 18 formed in the housing lower surface 11b. The coupling recess 18 is recessed from the housing lower surface 11b toward the housing upper surface 11a. The photoelectric sensor 10 is fixed to a fixing rail (not shown) that is inserted into the coupling recess 18. As shown in Fig. 2, a number of photoelectric sensors 10 may be arranged in the Y-direction (thickness-wise direction of housing 11) and fixed to the fixing rail.

Further, the photoelectric sensor 10 includes an operation portion cover 19. The operation portion cover 19 is pivotally supported by the housing 11 at the side toward the second end surface 11f. In an example, the operation portion cover 19 is pivotally supported by the second end surface 11f of the housing 11. The operation portion cover 19 is pivotally supported by, for example, a support member 19a arranged on the second end surface 11f. The operation portion cover 19 is formed to cover only the operation portion 16 when arranged at the position indicated by the double-dashed lines shown in Fig. 1.

### Housing and Internal Structure of Photoelectric Sensor

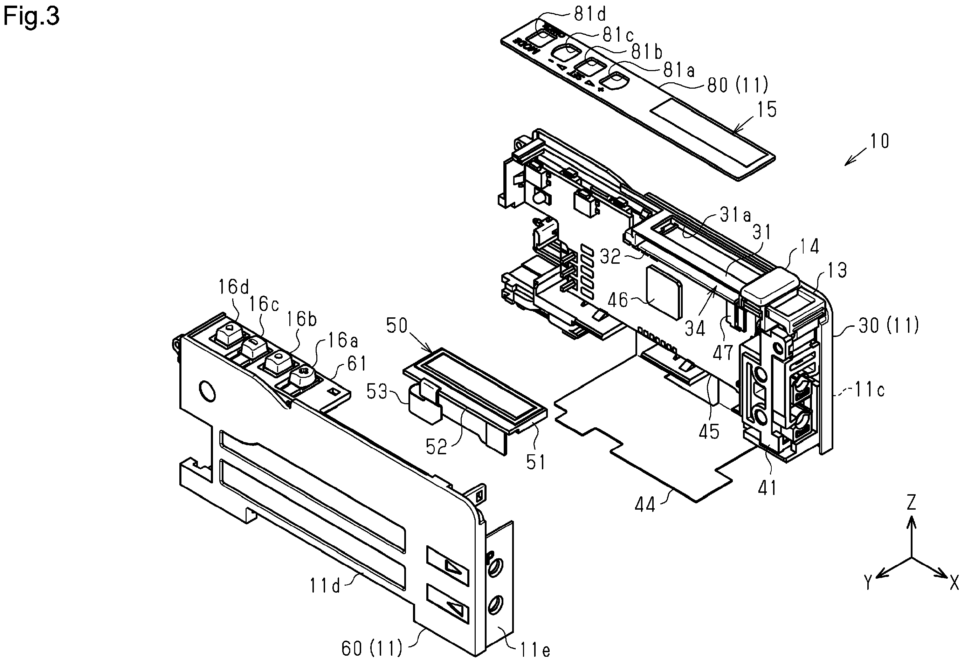

As shown in Fig. 3, the housing 11 includes a first case 30, a second case 60, and a cover member 80. The housing 11 is segmented into the first case 30 and the second case 60 in the Y-direction. The cover member 80 is attached to the first case 30 and the second case 60. The cover member 80 includes an upper surface that defines the housing upper surface 11a of the housing 11.

The first case 30 includes the first side surface 11c. The second case 60 includes the second side surface 11d.

The first case 30 includes a display portion upper surface plate 31 extending from the upper end of the first side surface 11c in the Y-direction. The display portion upper surface plate 31 includes an open portion 31a extending through the display portion upper surface plate 31 in the Z-direction. The open portion 31a is formed to expose characters and the like shown on a display portion 51 of a display unit 50. The open portion 31a defines the display region 15 that corresponds to the display portion 51.

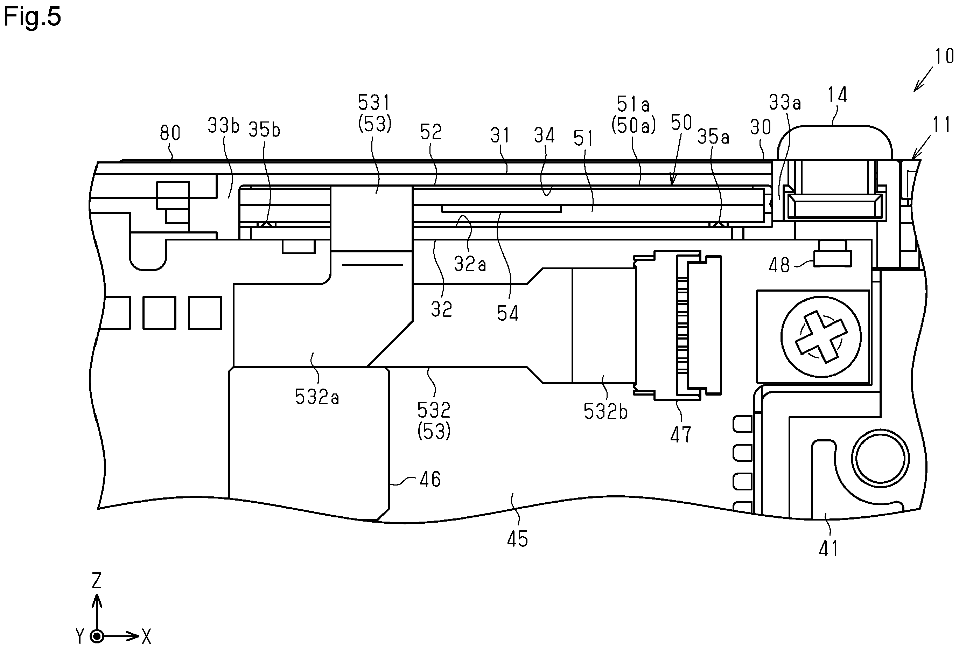

As shown in Figs. 3, 5, and 6, the first case 30 includes a display portion support plate 32 arranged below the display portion upper surface plate 31 in the Z-direction. As shown in Fig. 5, the display portion support plate 32 is coupled to the display portion upper surface plate 31 by coupling portions 33a and 33b arranged at the two ends of the display portion support plate 32 in the X-direction. The first case 30 includes an accommodation recess 34 surrounded by the display portion upper surface plate 31, the display portion support plate 32, and the coupling portions 33a and 33b. In other words, the display portion upper surface plate 31, the display portion support plate 32, and the coupling portions 33a and 33b define the accommodation recess 34. The accommodation recess 34 accommodates the display portion 51 and a connection portion 52 of the display unit 50. The coupling portions 33a and 33b hold the display unit 50 in position in the X-direction.

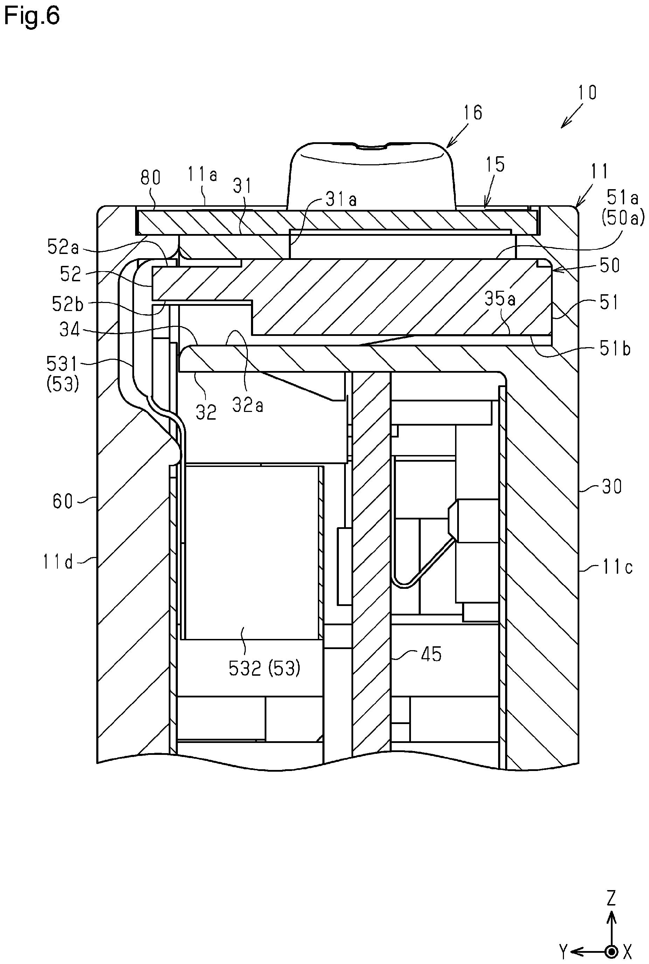

Two pressing portions 35a and 35b are formed on an upper 32a of the display portion support plate 32, which defines the accommodation recess 34, projecting toward the display portion upper surface plate 31. The two pressing portions 35a and 35b are arranged in the X-direction. As shown in Figs. 5 and 6, the two pressing portions 35a and 35b press a display surface 50a of the display unit 50, which is accommodated in the accommodation recess 34, toward the display portion upper surface plate 31. The pressing portions 35a and 35b hold the display unit 50 in position in the Z-direction. Thus, the display surface 50a of the display unit 50 is forced against the display portion upper surface plate 31.

As shown in Fig. 3, the first case 30 includes a fiber holding portion 41. When the first case 30 is coupled to the second case 60, the fiber holding portion 41 is fixed between the first case 30 and the second case 60. The fiber holding portion 41 is configured to hold the optical fibers 90A and 90B (refer to Fig. 1) inserted into the fiber insertion ports 12A and 12B of the second case 60. Further, the fiber holding portion 41 is configured to allow for insertion and removal of the optical fibers 90A and 90B (refer to Fig. 1) by operation of the fiber holding operation lever 13.

A light projector 42 and a light receiver 43 shown in Fig. 2 are arranged in the fiber holding portion 41. The light projector 42 is positioned to emit light into the optical fiber 90A (refer to Fig. 1) held by the fiber holding portion 41 shown in Fig. 3. The light receiver 43 is positioned to receive the light emitted from the optical fiber 90B (refer to Fig. 1) held by the fiber holding portion 41 shown in Fig. 3.

As shown in Fig. 3, a shielding panel 44 is arranged inside the housing 11. The shielding panel 44 is arranged between a control substrate 45 and the housing 11.

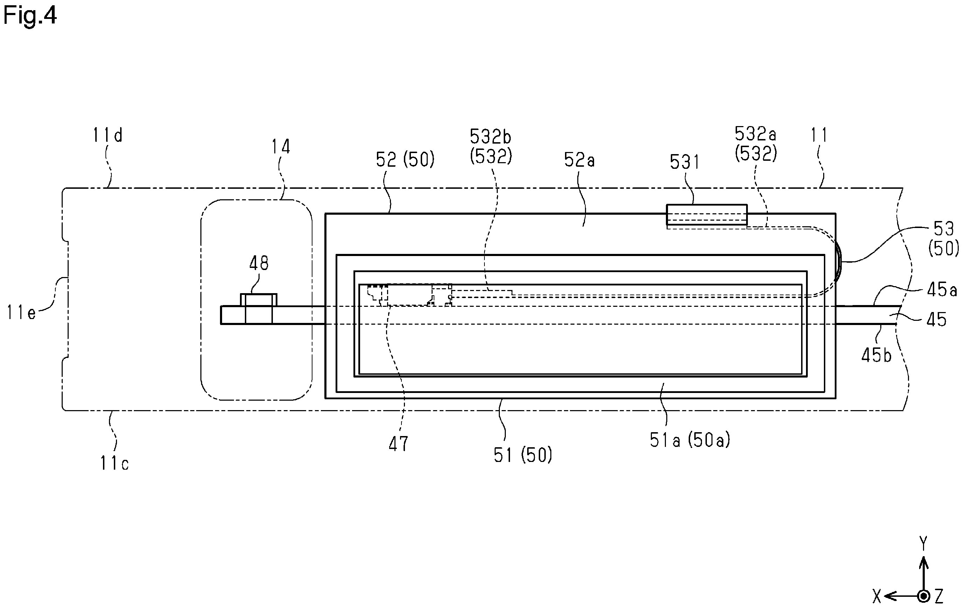

As shown in Fig. 3, the control substrate 45 is arranged in the first case 30. As shown in Fig. 4, the control substrate 45 includes a first main surface 45a and a second main surface faced away from the first main surface 45a. The control substrate 45 is positioned such that the first main surface 45a and the second main surface 45b are oriented in the Y-direction, which coincides with the latitudinal direction of the housing 11. The first main surface 45a faces the same direction as the second side surface 11d of the housing 11. Thus, the first main surface 45a faces the second case 60. The second main surface 45b faces the same direction as the first side surface 11c. Thus, the second main surface 45b faces the first case 30.

The control substrate 45 is coupled to the first case 30 from the side of the second case 60 and, for example, fastened to the fiber holding portion 41 by bolts. A control circuit 46 is mounted on the first main surface 45a of the control substrate 45. The control circuit 46 controls the light projector 42 and the light receiver 43. The control circuit 46 stores various types of information such as a threshold value and the like. The control circuit 46 shows on the display unit 50 an amount of light received by the light receiver 43. The control circuit 46 compares the amount of received light with the threshold value and determines whether there is a detection subject based on the comparison result. The control circuit 46 activates and inactivates the operation indicating light 14 based on the determination result. The control circuit 46 can show the determination result on the display unit 50.

Further, a connector 47 is mounted on the first main surface 45a of the control substrate 45. The connector 47 is an example of a display unit connector. The connector 47 connects the display unit 50 and the control substrate 45. Thus, the display unit 50 is connected to the control circuit 46 arranged on the control substrate 45 by the connector 47.

As shown in Fig. 4, a light emitting element 48 is mounted on the first main surface 45a of the control substrate 45. The light emitting element 48 is a light source that illuminates the operation indicating light 14.

The second case 60 includes an operation portion support plate 61 extending from the upper end of the second side surface 11d in the Y-direction. The operation portion support plate 61 supports operation buttons 16a, 16b, 16c, and 16d. The operation buttons 16a to 16d are aligned in the X-direction.

The cover member 80 is mounted on the display portion upper surface plate 31 of the first case 30 and the operation portion support plate 61 of the second case 60. The cover member 80 is attached to an attachment surface defined by the upper surface of the operation portion support plate 61 of the second case 60 and the upper surface of the display portion upper surface plate 31 of the first case 30.

The cover member 80 includes the display region 15 and insertion holes 81a to 81d. The display region 15 is configured to show information on the display portion 51 of the display unit 50, which is accommodated in the housing 11, in a manner visually recognizable from outside the photoelectric sensor 10. The cover member 80 is configured to be non-light-transmissive except for the display region. The operation buttons 16a to 16d of the operation portion 16 are inserted through the insertion holes 81a to 81d, respectively. Further, the applications of the operation buttons 16a to 16d are indicated on the cover member 80 by characters. In an example, the operation button 16a is an UP button, the operation button 16b is an ENTER button, the operation button 16c is a DOWN button, and the operation button 16d is a MODE SELECT button. The photoelectric sensor 10 changes a setting value shown on the display portion 51 in response to operations of the operation buttons 16a and 16c. The setting value includes a threshold value and the like. Further, the photoelectric sensor 10 stores the setting value, such as a threshold value, shown on the display portion 51 in response to operation of the operation button 16b. The operation button 16d is a mode switching button. The photoelectric sensor 10 switches various modes of the photoelectric sensor 10 with the operation button 16d. Further, the operation button 16d functions as a canceling button that cancels the changes made by the operation buttons 16a and 16c.

### Structure of Display Unit

As shown in Figs. 5 to 8, the display unit 50 includes the display portion 51, the connection portion 52, and a signal cable 53.

The display portion 51 has the form of a rectangular plate. The display portion 51 includes a display surface 51a and a lower surface 51b. Characters and the like are shown on the display surface 51a. The display surface 51a defines the display surface 50a of the display unit 50. The lower surface 51b faces away from the display surface 50a. As shown in Fig, 6, the lower surface 51b contacts the pressing portions 35a and 35b arranged in the accommodation recess 34 of the first case 30.

The display portion 51 is formed by a dot matrix display element. This display element may be an organic electro-luminescence (EL) panel, a liquid crystal panel, or the like. The dot matrix display element can show a greater amount of information (for example, number having many digits) compared to, for example, a display using a 7-segment display element.

The connection portion 52 is arranged on the display portion 51 in the latitudinal direction of the display portion 51. In an example, the connection portion 52 is arranged next to the display portion 51 in the latitudinal direction of the display portion 51. In an example, the display portion 51 and the connection portion 52 are a one-piece component. The connection portion 52 has the form of a rectangular plate. In the present embodiment, the connection portion 52 is identical to the display portion 51 in length. The connection portion 52 is narrower than the display portion 51. The connection portion 52 is thinner than the display portion 51. The connection portion 52 is connected to the signal cable 53.

The connection portion 52 includes an upper surface 52a and a lower surface 52b. The upper surface 52a faces toward the same side as the display surface 51a of the display portion 51. The lower surface 52b faces away from the upper surface 52a. The lower surface 52b of the connection portion 52 includes a drive circuit 54. The drive circuit 54 operates the display portion 51.

The signal cable 53 is connected to the connection portion 52. In the present embodiment, the signal cable 53 is connected to the connection portion 52 by a connecting material such as solder. The signal cable 53 may be connected to the connection portion 52 by a connector or the like.

The signal cable 53 extends from the connection portion 52 in a direction opposite the direction the upper surface 52a of the connection portion 52 is facing; that is, opposite to the direction the display surface 51a of the display portion 51 is facing. The signal cable 53 is a flexible circuit board. This substrate may be a flexible printed circuit board (FPC). The signal cable 53 may be a ribbon cable, a multi-core flat cable, or the like.

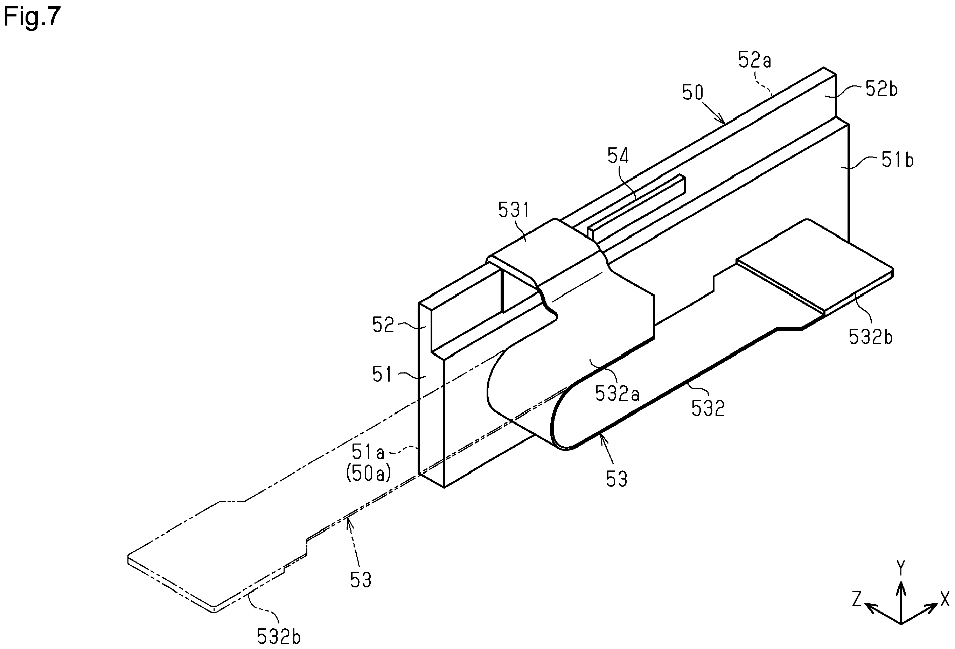

As shown in Fig. 7, the signal cable 53 includes a first cable 531 and a second cable 532. The first cable 531 extends from the connection portion 52. The second cable 532 extends from the first cable 531 in the longitudinal direction of the connection portion 52. In an example, the signal cable 53 includes part of the connection portion 52 in the longitudinal direction of the connection portion 52; preferably, an attachment connected to the connection portion 52 at the side opposite the connector 47 of the control substrate 45 in the longitudinal direction of the connection portion 52. In an example, the first cable 531 extends from the attachment of the signal cable 53 in a direction opposite the direction the upper surface 52a of the connection portion 52 is facing. In Fig. 7, the solid lines indicate the signal cable 53 when arranged inside the housing 11. Further, in Fig. 7, the double-dashed lines indicate the flexible signal cable 53 when not bent. In other words, the signal cable 53 is arranged inside the housing 11 in a bent state.

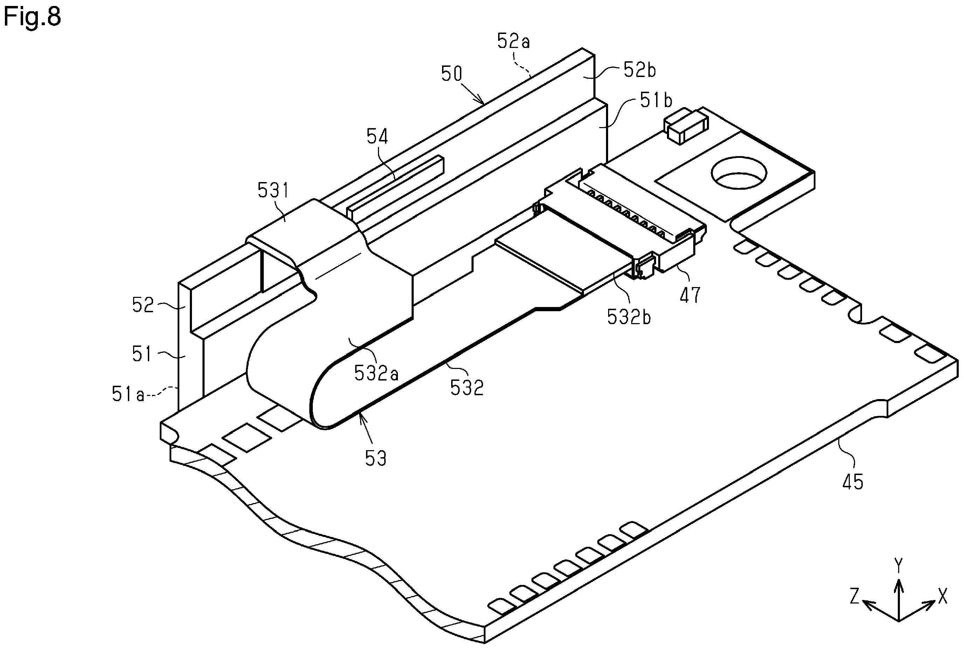

Fig. 8 shows the display unit 50 and the control substrate 45 in a connected state. With reference to Figs. 7 and 8, the second cable 532 includes a first end 532a and a second end 532b. The first end 532a is connected to the first cable 531. The second end 532b is opposite to the first end 532a. The first end 532a is connected to the first cable 531 at the side opposite the connector 47 of the control substrate 45. The second cable 532 extends from the first cable 531 in a direction protruding away from the connector 47 of the control substrate 45. Then, the second cable 532 is bent at the opposite side of the connector 47, and extends toward the connector 47. The second end 532b (distal end of signal cable 53) is connected to the connector 47. The first cable 531 and the second cable 532 may be formed by a single member. That is, the first cable 531 and the second cable 532 may be a one-piece component. In an example in which the display unit 50 is connected to the control substrate 45, the control substrate 45 is perpendicular to the lower surface 51b of the display portion 51 of the display unit 50. For example, the display unit 50 and the control substrate 45 form a T-shape. In an example, the first cable 531 may be arranged near a first end of the connection portion 52 in the longitudinal direction of the connection portion 52, and the connector 47 may be arranged on the control substrate 45 at the opposite side of the first end of the connection portion 52 in the longitudinal direction of the connection portion 52. Preferably, the connector 47 may be arranged on an end of the control substrate 45 at the opposite side of the first end of the connection portion 52 in the longitudinal direction of the connection portion 52 and/or near the lower surface 51b of the display portion 51.

### Operation

The operation of the photoelectric sensor 10 will now be described.

The photoelectric sensor 10 includes the box-shaped housing 11. The housing 11 includes the housing upper surface 11a that is rectangular. The photoelectric sensor 10 includes the operation portion 16 and the display unit 50 on the housing upper surface 11a. The operation portion 16 includes the operation buttons 16a to 16d. The display unit 50 is arranged next to the operation portion 16 in the longitudinal direction of the housing upper surface 11a (X-direction). The display unit 50 includes the display portion 51 and the connection portion 52. The display portion 51 is arranged relative to the operation portion 16 in the longitudinal direction of the housing upper surface 11a. The connection portion 52 is arranged next to the display portion 51 in the latitudinal direction of the housing upper surface 11a (Y-direction). This allows the display portion 51 and the operation portion 16 to be arranged next to each other in the longitudinal direction of the housing upper surface 11a (X-direction).

The operation buttons 16a to 16d are manually operated by an operator. If the intervals of the operation buttons 16a to 16d were narrow, the operator may erroneously touch two buttons or operate wrong buttons. Accordingly, the operation buttons 16a to 16d are set to have intervals that avoid erroneous operations. Such operation buttons 16a to 16d ensure the operability.

The control circuit 46 shows on the display portion 51 the amount of light received by the light receiver 43. The threshold value and the amount of received light are simultaneously shown on the display portion 51. Thus, a user can easily acknowledge the operational state and the set state of the optical fibers 90A and 90B. Basal ends of the optical fibers 90A and 90B are respectively inserted into the fiber insertion ports 12A and 12B of the photoelectric sensor 10. Distal ends of the optical fibers 90A and 90B are positioned such that the light emitted from the optical fiber 90A directly enters the optical fiber 90B. In this case, when a detection subject blocks at least part of the light entering the optical fiber 90B, the amount of incident light in the optical fiber 90B changes. Therefore, if there is no change in the amount of received light shown on the display portion 51, this indicates that the optical fibers 90A and 90B are not set such that the detection subject blocks the light. In other words, if there is no change in the amount of received light shown on the display portion 51, this indicates that the detection subject is not blocking the light. The distal ends of the optical fibers 90A and 90B may be positioned such that the light emitted from the optical fiber 90A indirectly enters the optical fiber 90B. In this case, when at least part of the light is reflected by the detection subject and enters the optical fiber 90B, the amount of incident light in the optical fiber 90B changes. Therefore, if there is no change in the amount of received light shown on the display portion 51, this indicates that the optical fibers 90A and 90B are not set such that the light reflected by the detection subject enters the optical fiber 90B. In other words, if there is no change in the amount of received light shown on the display portion 51, this indicates that the light reflected by the detection subject is not entering the optical fiber 90B.

The light projector 42 is a high-power element that projects a large amount of light. This increases the amount of light received by the light receiver 43. Accordingly, the digits indicating the amount of received light and the threshold value relative to the amount become large. For example, a display portion of a 7-segment display unit cannot show the amount of received light and the threshold value simultaneously.

The photoelectric sensor 10 of the present embodiment includes the display unit 50 having the display portion 51 of a dot matrix type. This allows the threshold value and the amount of received light having many digits to be shown simultaneously. Thus, the visibility of the display portion 51 is ensured.

As shown in Fig. 7, the display unit 50 includes the signal cable 53 connected to the connection portion 52. The signal cable 53 includes the first cable 531 and the second cable 532. The first cable 531 extends from the connection portion 52. The second cable 532 is connected to the first cable 531. The first cable 531 extends away from the display surface 50a of the display unit 50 in a direction that coincides with the height direction of the housing 11 (Z-direction). This limits increases in the size of the housing 11 in the widthwise direction (Y-direction).

The second cable 532 extends relative to the first cable 531 in a direction orthogonal to the direction in which the first cable 531 extends. The second end 532b is connected to the connector 47 in a state in which the second cable 532 is bent at the opposite side of the connector 47, and extends toward the connector 47. The connector 47 is connected to the second end 532b, or the distal end, of the second cable 532. The second cable 532 is bent in such a manner so that the position of the second end 532b of the second cable 532 is easily changed in the X-direction, or the longitudinal direction of the housing 11. This facilitates the connection of the second cable 532. Specifically, a technician assembling the photoelectric sensor 10 accommodates the display unit 50 in the accommodation recess 34 of the first case 30 and then connects the second cable 532 to the connector 47. If the position of the second end 532b of the second cable 532 is fixed, the technician would have to connect the second cable 532 and the connector 47 while moving at least one of the display unit 50 and the control substrate 45. In the photoelectric sensor 10 of the present embodiment, the position of the second end 532b of the second cable 532 is easily changed. Thus, the second cable 532, or the signal cable 53, can be connected to the connector 47 by only changing the position of the second end 532b of the second cable 532.

Also, if the position of the second end 532b of the second cable 532 is fixed, the signal cable 53 may not be sufficiently connected to the connector 47 when accidental errors in manufacturing or the like result in misalignment of the display unit 50 and the connector 47 of the control substrate 45. The photoelectric sensor 10 of the present embodiment allows the position of the second end 532b of the second cable 532 to be changed easily. Thus, even when the display unit 50 and the connector 47 of the control substrate 45 are misaligned, the position of the second end 532b can be changed in accordance with the misalignment. This ensures the connection of the signal cable 53 and the connector 47.

As shown in Fig. 3, the control substrate 45 is attached to the first case 30 from the side of the second case 60. In the same manner, the display unit 50 is inserted into the accommodation recess 34 of the first case 30 from the side of the second case 60. Then, the signal cable 53 of the display unit 50 is connected to the connector 47 mounted on the first main surface 45a of the control substrate 45. The photoelectric sensor 10 is assembled when the second case 60 is coupled to the first case 30. In this manner, the control substrate 45, the display unit 50, and the second case 60 are attached to the first case 30 in the same direction. This improves assembling workability as compared to when these components are coupled to the first case 30 in different directions.

### Advantages

As described above, the present embodiment has the following advantages.
(1) The photoelectric sensor 10 includes the box-shaped housing 11. The housing 11 includes the housing upper surface 11a that is rectangular. The photoelectric sensor 10 includes the operation portion 16 and the display unit 50 on the housing upper surface 11a. The operation portion 16 includes the operation buttons 16a to 16d. The display unit 50 is arranged next to the operation portion 16 in the longitudinal direction of the housing upper surface 11a (X-direction). The display unit 50 includes the display portion 51 and the connection portion 52. The display portion 51 is arranged relative to the operation portion 16 in the longitudinal direction of the housing upper surface 11a. The connection portion 52 is arranged next to the display portion 51 in the latitudinal direction of the housing upper surface 11a (Y-direction). This allows the display portion 51 and the operation portion 16 to be arranged next to each other in the longitudinal direction of the housing upper surface 11a (X-direction).
(2) The photoelectric sensor 10 includes the display unit 50 having the display portion 51 of a dot matrix type. This allows the threshold value and the amount of received light having many digits to be shown simultaneously. Thus, the visibility of the display portion 51 is ensured.
(3) The display unit 50 includes the signal cable 53 connected to the connection portion 52. The signal cable 53 includes the first cable 531 and the second cable 532. The first cable 531 extends from the connection portion 52. The second cable 532 is connected to the first cable 531. The first cable 531 extends away from the display surface 50a of the display unit 50 in a direction that coincides with the height direction of the housing 11 (Z-direction). This limits increases in the size of the housing 11 in the widthwise direction (Y-direction).
(4) The second cable 532 extends relative to the first cable 531 in a direction orthogonal to the direction in which the first cable 531 extends. The second end 532b is connected to the connector 47 in a state in which the second cable 532 is bent at the opposite side of the connector 47, and extends toward the connector 47. The connector 47 is connected to the second end 532b, or the distal end, of the second cable 532. The second cable 532 is bent in such a manner so that the position of the second end 532b of the second cable 532 is easily changed in the X-direction, or the longitudinal direction of the housing 11. Thus, the second cable 532, or the signal cable 53, can be connected to the connector 47 by only changing the position of the second end 532b of the second cable 532.
(5) In the photoelectric sensor 10 of the present embodiment, the position of the second end 532b of the second cable 532 is easily changed. Thus, even when the display unit 50 and the connector 47 of the control substrate 45 are misaligned, the position of the second end 532b can be changed in accordance with the misalignment. This ensures the connection of the signal cable 53 and the connector 47.
(6) The control substrate 45 is attached to the first case 30 from the side of the second case 60. In the same manner, the display unit 50 is inserted into the accommodation recess 34 of the first case 30 from the side of the second case 60. Then, the signal cable 53 of the display unit 50 is connected to the connector 47 mounted on the first main surface 45a of the control substrate 45. The photoelectric sensor 10 is assembled when the second case 60 is coupled to the first case 30. In this manner, the control substrate 45, the display unit 50, and the second case 60 are attached to the first case 30 in the same direction. This improves assembling workability as compared to when these components are coupled to the first case 30 in different directions.

### Modified Examples

The description related with the above embodiment exemplifies, without any intention to limit, an applicable form of a photoelectric sensor according to the present disclosure. In addition to the embodiment described above, the present disclosure is applicable to, for example, modified examples of the embodiment that are described below and combinations of at least two of the modified examples that do not contradict each other.

The drive circuit 54 may be arranged on the signal cable 53.

The signal cable 53 may be connected to the connection portion 52 by a connector, through pressure-bonding, or the like.

The signal cable 53 may be connected to the control substrate 45 through soldering, pressure-bonding, or the like. In this case, the control substrate 45 includes a pad for soldering, a member for pressure-bonding, or the like as a display unit connector.

The signal cable 53 may be a terminal such as a metal lead.

The above description is merely exemplary. Those skilled in the art would recognize that more combinations and replacements of the elements and methods (manufacturing processes) are possible other than those described to illustrate the technology used in the present disclosure. The present disclosure is intended to incorporate all alternatives, modifications, and variations that fall within the scope of the present disclosure including the claims.

## Claims

1. A photoelectric sensor (10), comprising:
a box-shaped housing (11) including a rectangular first surface (11a);
a light projector (42) and a light receiver (43) that are arranged inside the housing (11);
an operation portion (16) arranged on the first surface (11a) and including operation buttons (16a to 16d) that are configured to be operable by an operator;
a display unit (50) arranged inside the housing (11) and including
a dot matrix type display portion (51) disposed next to the operation portion (16) in a longitudinal direction of the first surface (11a), and
a connection portion (52) disposed next to the display portion (51) in a latitudinal direction of the first surface (11a);
a substrate (45) arranged inside the housing (11) and including a first main surface (45a) and a second main surface (45b) faced away from each other in the latitudinal direction of the first surface (11a); and
a control circuit (46) mounted on the substrate (45) and showing on the display portion (51) an amount of light received by the light receiver (43).

2. The photoelectric sensor (10) according to claim 1, wherein the operation buttons (16a to 16d) of the operation portion (16) are aligned in the longitudinal direction of the first surface (11a).

3. The photoelectric sensor (10) according to claim 1 or 2, wherein:
the display unit (50) includes a signal cable (53) connected to the substrate (45); and
the signal cable (53) extends from the connection portion (52) in a direction opposite a direction a display surface (51a) of the display unit (50) is facing.

4. The photoelectric sensor (10) according to claim 3, wherein:
the substrate (45) includes a display unit connector (47) at a position separated from where the signal cable (53) extends from the connection portion (52) in the longitudinal direction of the first surface (11a), the display unit connector (47) being connected to the signal cable (53); and
the signal cable (53) includes
a first cable (531) extending from the connection portion (52) in the direction opposite the direction the display surface (51a) of the display unit (50) is facing, and
a second cable (532) including a first end (532a) and a second end (532b) that is opposite to the first end (532a), the first end (532a) being connected to the first cable (531) at an opposite side of the display unit connector (47), the second cable (532) being bent at the opposite side of the connector (47) and extending toward the connector (47), and the second end (532b) being connected to the display unit connector(47).

5. The photoelectric sensor (10) according to claim 4, wherein the display unit connector (47) is a connector mounted on the substrate (45).

6. The photoelectric sensor (10) according to any one of claims 3 to 5, wherein the signal cable (53) is a flexible printed circuit board.

7. The photoelectric sensor (10) according to any one of claims 3 to 6, wherein the display unit (50) includes a drive circuit (54) that operates the display portion (51).

8. The photoelectric sensor (10) according to claim 7, wherein the drive circuit (54) is arranged on the connection portion (52).

9. The photoelectric sensor (10) according to claim 7, wherein the drive circuit (54) is arranged on the signal cable (53).

10. The photoelectric sensor (10) according to any one of claims 1 to 9, wherein:
the housing (11) includes a first side surface (11c) and a second side surface (11d) faced away from each other in the latitudinal direction of the first surface (11a);
the housing (11) includes a first case (30) having the first side surface (11c) and a second case (60) having the second side surface (11d); and
the first case (30) includes an accommodation recess (34) into which the display portion (51) is inserted from a side of the first case (30) opposite to the first side surface (11c).

11. The photoelectric sensor (10) according to claim 10, wherein the accommodation recess (34) includes a pressing portion (35a, 35b) that presses the accommodated display portion (51) toward an upper surface plate (31) that defines the first surface (11a).

12. The photoelectric sensor (10) according to any one of claims 1 to 11, further comprising:
a cover member (80) attached to the first surface (11a) and including
openings (81a to 81d) through which the operation buttons (16a to 16d) are respectively inserted, and
a display region (15) configured to show information on the display portion (51) in a manner visually recognizable from outside the photoelectric sensor (10).

13. The photoelectric sensor (10) according to claim 12, wherein the housing (11) includes a first end surface (11e) and a second end surface (11f) faced away from each other in the longitudinal direction of the first surface (11a) and the photoelectric sensor (10) further comprising:
an operation portion cover (19) pivotally supported by the second end surface (11f) of the housing (11) and being configured to cover only the operation portion (16).

14. The photoelectric sensor (10) according to claim 13, further comprising:
a fiber holding portion (41) arranged in the first end surface (11e) of the housing (11) to hold a light projecting optical fiber (90A) that guides light from the light projector (42) to outside the housing (11) and a light receiving optical fiber (90B) that guides light from outside the housing (11) to the light receiver (43); and
a cable connector (17) arranged in the second end surface (11f) of the housing (11) and connected to an external cable.
